# FASCICULE DE BREVET EUROPEEN

(11) **EP 2 152 579 B1**
(45) Date de publication et mention de la délivrance du brevet: **06.04.2011**
(21) Numéro de dépôt: 08805717.9
(22) Date de dépôt: 28.04.2008
(51) Int. Cl.: B64D 13/00

(54) **DISPOSITIF DE SORTIE D'AIR MOBILE POUR UN AERONEF**
BEWEGLICHE LUFTAUSLASSVORRICHTUNG FÜR EIN LUFTFAHRZEUG
MOVABLE AIR OUTLET DEVICE FOR AN AIRCRAFT

(30) Priorité: 04.05.2007 FR 0754874
(43) Date de publication de la demande: 17.02.2010
(73) Titulaire: Airbus Operations, 31060 Toulouse (FR)
(72) Inventeur: STEVENS, Thomas, F-31170 Tournefeuille (FR); BARBARA, Olivier, F-81700 Puylaurens (FR)
(74) Mandataire: Fantin, Laurent
(86) Numéro de dépôt international: PCT/FR2008/050763
(87) Numéro de publication internationale: WO 2008/148973

(56) Documents cités:
- EP-A- 0 343 020
- FR-A- 1 442 468
- US-A- 1 733 770
- US-A- 3 544 045

## Description

La présente invention se rapporte à un dispositif de sortie d'air mobile pour un aéronef plus particulièrement destiné à être disposé au niveau d'une surface aérodynamique susceptible d'être en contact avec les flux d'air s'écoulant à l'extérieur dudit aéronef.

Un aéronef est généralement équipé de systèmes d'air, notamment pour assurer le réchauffage, le refroidissement ou la ventilation, comprenant des circuits s'étendant depuis au moins une entrée d'air jusqu'à au moins une sortie d'air en traversant des échangeurs ou tout autre appareil nécessitant de l'air ou fonctionnant avec de l'air.

Selon les cas, ces entrées et sorties d'air sont disposées en surface du fuselage, de la voilure, d'une nacelle ou d'un mât, et plus généralement au niveau de la surface aérodynamique de l'aéronef.

Ces systèmes d'air induisent nécessairement une traînée parasite découlant par exemple des défauts de surface liés à l'implantation de l'entrée ou de la sortie au niveau de la surface en contact avec le flux d'air extérieur, en raison de la différence d'énergie du flux d'air entre l'entrée et la sortie du système ou en raison des éventuels élargissements des formes aérodynamiques engendrés par les contraintes d'installation du système.

Or, pour répondre aux attentes des clients, les constructeurs d'aéronef cherchent à améliorer l'aérodynamisme de leurs appareils afin de réduire leurs coûts d'exploitation fortement liés à la consommation en carburant.

Afin d'atteindre cet objectif, la meilleure solution concernant un système d'air consiste à optimiser les pertes de charge de l'ensemble dudit système d'air.

La présente demande vise à optimiser une partie du système d'air à savoir un dispositif de sortie d'air.

Un dispositif de sortie d'air influence l'aérodynamisme de l'aéronef en raison de la traînée parasite générée lorsqu'elle ne débite pas d'air découlant du défaut de surface ou lorsqu'elle débite de l'air résultant de la perturbation du flux d'air extérieur.

Par ailleurs, les pertes de charge subies par le flux d'air du système lors de son passage au travers de la sortie d'air influencent également l'aérodynamisme de l'aéronef.

Pour compenser ces influences négatives, on cherche à récupérer la poussée fournie à l'aéronef par la sortie d'air lorsqu'il existe une circulation d'air dans le système. Dans ce sens, l'idéal est d'éjecter l'air dans la direction et le sens du flux d'air extérieur, avec une vitesses d'éjection élevée afin de maximiser le module de l'effort de poussée.

Selon l'art antérieur, il existe deux grandes familles de sorties d'air.

La première famille de sorties de type dynamique, comprend un renflement au niveau de la sortie d'air, avec une sortie orientée vers l'arrière de l'aéronef. Cette configuration permet de réduire les pertes de charge dans la mesure où la sortie protège l'air du système du flux d'air extérieur en le guidant progressivement dans la direction dudit flux d'air extérieur ce qui contribue également à maximiser la récupération de la poussée produite par l'air sortant. Cependant, cette configuration crée un défaut de surface considérable qui produit une traînée parasite importante.

Par conséquent, cette solution est préconisée lorsque l'énergie de l'écoulement sortant du système est supérieure à celle du flux de l'air extérieur, notamment lorsque les avantages découlant de la récupération de la poussée générée par l'air sortant compensent les inconvénients liés à la traînée parasite créée.

La présente invention se rapporte plus précisément à la seconde famille de sorties d'air de type affleurant. Par rapport aux sorties de type dynamique, les sorties de type affleurant génèrent un défaut de surface et une traînée parasite moindres.

Cependant, cette configuration est moins performante en matière de perte de charge et de récupération de poussée dans la mesure où l'air sortant peut difficilement être orienté dans la direction du flux d'air extérieur. Généralement, une sortie d'air de type affleurant est équipée d'une grille comme illustrée sur la figure 1 et décrite dans le document FR20070052546. Une sortie d'air 10 sous forme de grille comprend une pluralité d'ouvertures 12 de forme rectangulaire délimitées par des zones intercalaires 14 disposées dans le prolongement de la surface aérodynamique de l'aéronef, chaque ouverture 12 comprenant un déflecteur 16 orienté vers l'intérieur et incliné afin d'une part, de diriger l'air sortant matérialisé par les flèches 18 dans une direction proche de celle du flux d'air extérieur 20, et d'autre part, de réduire la taille du défaut de surface.

Selon un mode de réalisation répandu, la sortie d'air comprend plusieurs étages 22 d'ouvertures 12, lesdits étages étant séparés par au moins un renfort ou couloir 24 permettant d'augmenter les caractéristiques mécaniques de la grille. Ces sorties d'air de type grille permettent de réduire sensiblement le défaut de surface. Cependant, elles ne sont pas satisfaisantes au niveau des pertes de charge qui demeurent importantes et qui sont fonction de la surface de ladite sortie.

Selon une autre contrainte, une sortie d'air doit être dimensionnée pour répondre aux besoins les plus importants qui sont ceux en cas de panne, dont l'occurrence est rare. Par conséquent, une sortie d'air est généralement surdimensionnée pour répondre aux besoins d'un vol normal, ce qui induit des pertes de charge et des défauts de surface supplémentaires réduisant les performances aérodynamiques de l'aéronef.

Aussi, la présente invention vise à pallier les inconvénients de l'art antérieur en proposant un dispositif de sortie d'air de type grille permettant d'optimiser les caractéristiques aérodynamiques de ladite sortie pour des conditions de vols normaux mais répondant aux besoins en cas de panne.

A cet effet, l'invention a pour objet un dispositif de sortie d'air équipé d'une grille rapportée au niveau d'une surface aérodynamique d'un aéronef, ladite grille comprenant une pluralité d'ouvertures délimitées par des zones intercalaires disposées dans le prolongement de la surface aérodynamique de l'aéronef, ledit dispositif et la grille se caractérisant par une surface permettant le passage de l'air appelée surface de passage, caractérisé en ce qu'il comprend au moins une partie mobile afin d'augmenter la surface de passage du dispositif, notamment en cas de panne et en ce que la grille a une surface de passage déterminée en fonction du débit d'air à évacuer dans les conditions les plus contraignantes d'un vol normal, en l'absence de panne.

Cette solution permet d'obtenir une réduction de la surface de la grille significative qui se traduit par une réduction des défauts de surface. De plus, les formes de la grille étant déterminées en fonction d'un régime de fonctionnement dit normal en l'absence de panne, les pertes de charge sont optimisées pour ce régime de fonctionnement et non pour un régime rare comme une panne qui conduit à augmenter la section de sortie recouverte par la grille.

D'autres caractéristiques et avantages ressortiront de la description qui va suivre de l'invention, description donnée à titre d'exemple uniquement, en regard des dessins annexés sur lesquels :
- la figure 1 est une coupe d'une sortie d'air,
- la figure 2A est une coupe illustrant schématiquement une sortie d'air selon une première variante de l'invention dans un premier état correspondant à des conditions de vol normal,
- la figure 2B est une coupe illustrant schématiquement une sortie d'air selon une première variante de l'invention dans un second état correspondant à un fonctionnement en cas de panne,
- la figure 3A est une vue en perspective d'une sortie d'air selon une seconde variante de l'invention dans un premier état correspondant à des conditions de vol normal,
- la figure 3B est une vue en perspective d'une sortie d'air selon une seconde variante de l'invention dans un second état correspondant à un fonctionnement en cas de panne,
- la figure 4A est une coupe illustrant schématiquement une sortie d'air selon une autre variante de l'invention dans un premier état correspondant à des conditions de vol normal, et
- la figure 4B est une coupe illustrant schématiquement une sortie d'air selon une autre variante de l'invention dans un second état correspondant à un fonctionnement en cas de panne.

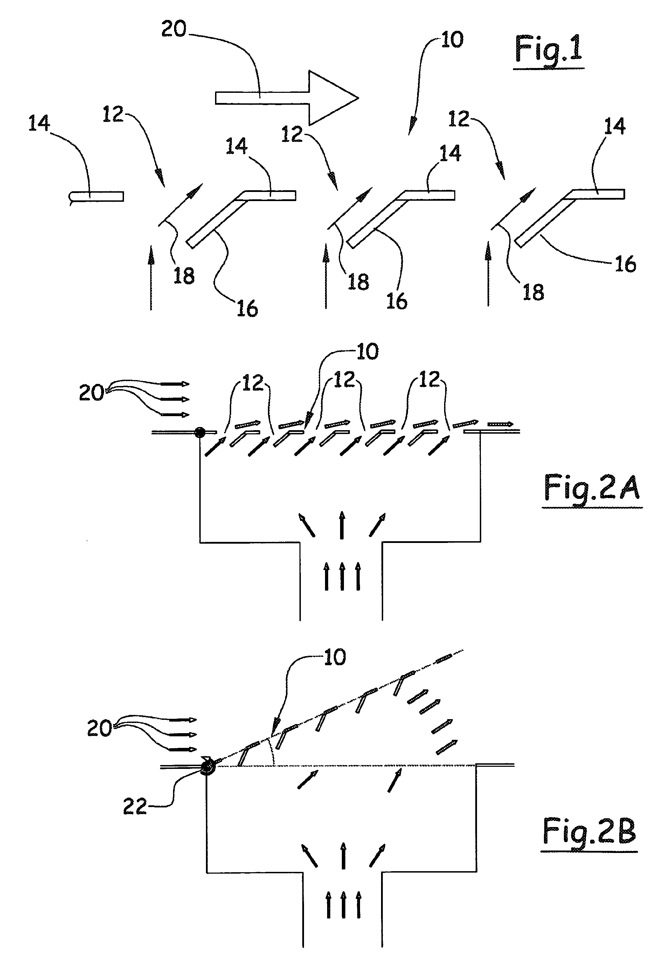

Sur la figure 1, on a représenté en coupe un dispositif de sortie d'air comportant un orifice ou une sortie débouchant au niveau d'une surface aérodynamique d'un aéronef, ladite sortie étant équipée d'une grille 10 rapportée au niveau de ladite surface aérodynamique.

Cette grille peut être prévue au niveau de la nacelle, du fuselage, d'un mât ou de la voilure. Néanmoins, d'autres positions sont envisageables.

Ce dispositif de sortie d'air peut être intégré à l'un des systèmes d'air de l'aéronef comportant chacun un circuit s'étendant depuis au moins une entrée d'air jusqu'à au moins une sortie d'air en traversant au moins un échangeur ou tout autre appareil nécessitant de l'air ou fonctionnant avec de l'air tel que par exemple un système de réchauffage, de refroidissement ou de ventilation. Ces systèmes d'air ne sont pas plus détaillés car ils sont connus de l'homme du métier. Par ailleurs, le dispositif de sortie d'air selon l'invention n'est pas limité à ces applications et peut convenir à d'autres circuits, d'autres appareils ou d'autres entrées d'air.

Selon un mode de réalisation, une grille 10 comprend une pluralité d'ouvertures 12 délimitées par des zones intercalaires 14 disposées dans le prolongement de la surface aérodynamique de l'aéronef. Chaque ouverture 12 peut comprendre un déflecteur 16 orienté vers l'intérieur et incliné afin d'une part, de diriger l'air sortant matérialisé par les flèches 18 dans une direction proche de celle du flux d'air extérieur 20, et d'autre part de réduire la taille du défaut de surface.

En variante, la grille 10 peut ne comprendre aucun déflecteur ou des déflecteurs sous forme de volets articulés selon des axes de rotation prévus au niveau d'un des côtés de l'ouverture, notamment celui perpendiculaire au flux d'air extérieur 20 et disposé en aval selon ce même flux 20. Le mouvement des volets, notamment l'ouverture des volets, peut être contrôlé par tout moyen approprié.

Pour limiter les défauts de surface, les ouvertures ont une largeur étroite.

Pour augmenter les caractéristiques mécaniques et structurelles de la sortie d'air 10, cette dernière peut comprendre au moins un renfort longitudinal ou couloir séparant les ouvertures en au moins deux étages. Ce ou ces couloir(s) permet(tent) de limiter la hauteur (direction perpendiculaire au flux d'air extérieur 20) des ouvertures pour limiter les risques de flexion des zones intercalaires 14 prévues entre les ouvertures d'un même étage.

Le dispositif de sortie se caractérise par une surface de passage correspondant à la surface dégagée de la sortie autorisant le passage de l'air, ladite surface de passage étant déterminée en fonction notamment du débit d'air à évacuer. Lorsque la sortie est obturée par une grille, la surface de passage du dispositif de sortie d'air correspond à la somme des surfaces des ouvertures 12.

Selon l'invention et contrairement à l'art antérieur, la surface de passage de la grille n'est pas déterminée en fonction du débit d'air à évacuer lors d'une panne mais du débit d'air à évacuer dans les conditions les plus contraignantes d'un vol normal en l'absence de panne.

A titre d'exemple, une grille de sortie de système de pré-refroidissement était dimensionnée selon l'art antérieur pour un cas de panne dont la fréquence est d'une panne toutes les 10000 heures de vol. Pour une panne, le débit d'air à évacuer est de l'ordre de 2,4 Kg/s, ce qui nécessite une surface de passage de l'ordre de 10 dm² soit une surface de grille de l'ordre de 43 dm².

Dans ce cas, selon l'invention, la surface de passage est déterminée en fonction du débit d'air à évacuer pour le cas le plus contraignant d'un vol normal, soit un débit d'air à évacuer de 1,9 Kg/s. Ce débit nécessite une surface de passage de l'ordre de 4,2 dm², soit une surface de grille de l'ordre de 20 dm².

On note une réduction de la surface de la grille significative qui se traduit par une réduction des défauts de surface.

Les formes de la grille étant déterminées en fonction d'un régime de fonctionnement dit normal en l'absence de panne, les pertes de charge sont optimisées pour les conditions de vol normal en l'absence de panne.

Pour permettre le passage d'un débit d'air plus conséquent en cas de panne, la sortie comprend au moins une partie mobile afin de modifier la surface de passage, et l'augmenter en cas de panne ou lors d'un besoin ponctuel.

Selon un premier mode de réalisation, la sortie peut être obturée par la grille et par au moins une partie mobile de manière à faire varier la surface de passage de la sortie, ladite partie mobile étant susceptible d'occuper un premier état dans laquelle elle dégage au moins partiellement la sortie, notamment en cas de panne, pour permettre le passage d'un débit d'air à évacuer plus important et un second état dans laquelle elle est disposée dans le plan de la surface aérodynamique de l'aéronef et obture au moins partiellement ladite sortie.

Avantageusement, la grille 10 ou au moins une partie de la grille 10 est mobile pour dégager au moins partiellement la sortie. Cette solution permet d'obtenir un dispositif plus compact dans la mesure où la section de la sortie correspond à celle approximativement de la grille.

Pour simplifier les explications, l'invention est décrite appliquée à une grille mobile. Bien entendu, les explications données peuvent s'appliquer à une partie mobile de la grille.

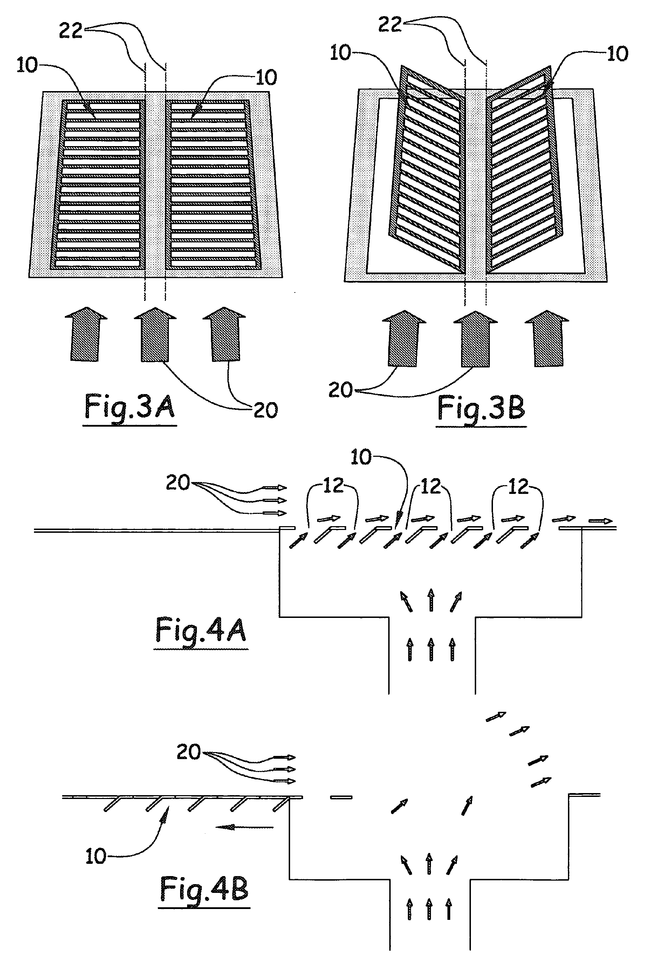

Selon une première variante, la grille peut pivoter selon un axe de pivotement 22 disposé au niveau de la surface aérodynamique de l'aéronef comme illustré sur les figures 2A, 2B, 3A et 3B.

Ainsi, en l'absence de panne, la grille 10 est disposée dans le prolongement de la surface aérodynamique de l'aéronef comme illustré sur les figures 2A et 3A. En présence d'une panne ou lors d'un besoin ponctuel, la grille 10 pivote de manière à dégager la sortie comme illustré sur les figures 2B et 3B, permettant le passage d'un débit d'air plus important.

L'angle optimal de pivotement de la grille est de l'ordre de 30°.

Selon un premier mode de réalisation, l'axe de pivotement 22 est perpendiculaire à la direction du flux d'air extérieur 20, comme illustré sur les figures 2A et 2B. Dans ce cas, l'axe de pivotement 22 est de préférence disposé au niveau du bord amont de la grille selon la direction du flux d'air extérieur. Ainsi, en cas de panne on retrouve une configuration de sortie d'air de type dynamique permettant de maximiser la récupération de la poussée produite par l'air sortant, qui dans le cas d'une panne à un débit important et de réduire les pertes de charge. Par ailleurs, cette configuration permet de générer une dépression en sortie favorisant l'extraction de l'air.

Selon un autre avantage de cette configuration, elle permet d'obtenir un dispositif de sortie compact.

Selon un autre mode de réalisation, l'axe de pivotement 22 est parallèle à la direction du flux d'air extérieur 20, comme illustré sur les figures 3A et 3B.

Selon une autre variante illustrée sur les figures 4A et 4B, la grille 10 peut se translater entre une première position illustrée sur la figure 4A dans laquelle elle est disposée au droit de l'ouverture et une deuxième position illustrée sur la figure 4B dans laquelle elle dégage au moins partiellement la sortie permettant le passage d'un débit d'air plus important. Selon le mode de réalisation illustré sur les figures 4A et 4B, la grille peut se translater dans le plan de la surface aérodynamique de l'aéronef.

Des actionneurs sont prévus pour piloter le mouvement de la grille ou de la partie de la grille, par exemple des vérins, des ressort ou des vis sans fin.

## Revendications

1. Dispositif de sortie d'air équipé d'une grille (10) rapportée au niveau d'une surface aérodynamique d'un aéronef, ladite grille comprenant une pluralité d'ouvertures (12) délimitées par des zones intercalaires (14) aptes à être disposées dans le prolongement de la surface aérodynamique de l'aéronef, ledit dispositif et la grille **se caractérisant par** une surface permettant le passage de l'air appelée surface de passage, **caractérisé en ce qu'**il comprend au moins une partie mobile afin d'augmenter la surface de passage dudit dispositif, notamment en cas de panne, et **en ce que** la grille (10) a une surface de passage déterminée en fonction du débit d'air à évacuer dans les conditions les plus contraignantes d'un vol normal, en l'absence de panne.

2. Dispositif de sortie d'air selon la revendication 1, **caractérisé en ce que** la grille (10) ou au moins une partie de la grille (10) est mobile afin d'occuper une première position correspondant aux conditions de vol normal dans laquelle ladite grille (10) ou ladite au moins une partie de grille est disposée au droit de la sortie dans le prolongement de la surface aérodynamique de l'aéronef et une autre position correspondant, notamment aux conditions d'une panne, dans laquelle ladite grille (10) ou ladite au moins une partie de grille (10) dégage au moins partiellement l'ouverture de manière à augmenter la surface de passage dudit dispositif.

3. Dispositif de sortie d'air selon la revendication 2, **caractérisé en ce que** la grille (10) ou au moins une partie de la grille (10) peut se translater.

4. Dispositif de sortie d'air selon la revendication 2, **caractérisé en ce que** la grille (10) ou au moins une partie de la grille (10) peut pivoter.

5. Dispositif de sortie d'air selon la revendication 4, **caractérisé en ce que** la grille (10) ou au moins une partie de la grille (10) peut pivoter selon un axe de pivotement (22) parallèle à la direction du flux d'air (20) s'écoulant à l'extérieur de l'aéronef.

6. Dispositif de sortie d'air selon la revendication 4, **caractérisé en ce que** la grille (10) ou au moins une partie de la grille (10) peut pivoter selon un axe de pivotement (22) perpendiculaire à la direction du flux d'air (20) s'écoulant à l'extérieur de l'aéronef.

7. Dispositif de sortie d'air selon la revendication 6, **caractérisé en ce que** l'axe de pivotement (22) est disposé au niveau du bord amont de la grille (10) selon la direction du flux d'air (20) s'écoulant à l'extérieur de l'aéronef.

8. Dispositif de sortie d'air selon l'une des revendications 5 à 7, **caractérisé en ce que** l'angle de pivotement de la grille est de l'ordre de 30°.

9. Aéronef comprenant un dispositif de sortie d'air selon l'une quelconque des revendications précédentes.

## Claims

1. Air exhaust device that is equipped with a grid (10) that is connected to an aerodynamic surface of an aircraft, whereby said grid comprises a number of openings (12) that are delimited by separating zones (14) able to be arranged in the extension of the aerodynamic surface of the aircraft, whereby said device and the grid are **characterized by** a surface that makes possible the passage of the air called passage surface, **characterized in that** it comprises at least one movable part so as to increase the passage surface of said device, in particular in the case of a malfunction, and **in that** the grid (10) has a passage surface that is determined as a function of the flow rate of air that is to be evacuated under the most restrictive conditions of a normal flight, in the absence of a malfunction.

2. Air exhaust device according to claim 1, wherein the grid (10) or at least a portion of the grid (10) is movable so as to occupy a first position that corresponds to the normal flight conditions in which said grid (10) or said at least one portion of the grid is arranged to the right of the exhaust in the extension of the aerodynamic surface of the aircraft and another corresponding position, in particular in the conditions of a malfunction, in which said grid (10) or said at least one portion of the grid (10) at least partially detaches the opening so as to increase the passage surface of said device.

3. Air exhaust device according to claim 2, wherein the grid (10) or at least a portion of the grid (10) can move translationally.

4. Air exhaust device according to claim 2, wherein the grid (10) or at least a portion of the grid (10) can pivot.

5. Air exhaust device according to claim 4, wherein the grid (10) or at least a portion of the grid (10) can pivot along a pivoting axis (22) that is parallel to the direction of the air flow (20) that flows outside of the aircraft.

6. Air exhaust device according to claim 4, wherein the grid (10) or at least a portion of the grid (10) can pivot along a pivoting axis (22) that is perpendicular to the direction of the air flow (20) that flows outside of the aircraft.

7. Air exhaust device according to claim 6, wherein the pivoting axis (22) is arranged at the upstream edge of the grid (10) in the direction of the air flow (20) flowing outside of the aircraft.

8. Air exhaust device according to one of claims 5 to 7, wherein the pivoting angle of the grid is on the order of 30°.

9. Aircraft that comprises an air exhaust device according to any of the preceding claims.

## Patentansprüche

1. Luftaustrittsvorrichtung, die mit einem Gitter (10) versehen ist, das im Bereich einer aerodynamischen Fläche eines Flugzeugs angebracht ist, wobei das Gitter eine Vielzahl von Öffnungen (12) umfasst, die durch Zwischenbereiche (14) begrenzt sind, welche geeignet sind, in der Verlängerung der aerodynamischen Fläche des Flugzeugs angeordnet zu werden, wobei die Vorrichtung und das Gitter durch eine den Durchgang der Luft ermöglichende Fläche, welche als Durchgangsflächc bezeichnet wird, **gekennzeichnet sind, dadurch gekennzeichnet, dass** sie wenigstens einen beweglichen Teil umfasst, um die Durchgangsfläche der Vorrichtung zu vergrößern, insbesondere im Fall einer Störung, und dass das Gitter (10) eine Durchgangsfläche aufweist, die in Abhängigkeit von der Luftmenge, die unter den belastendsten Bedingungen eines normalen Fluges, wenn keine Störung vorliegt, abzuführen ist, bestimmt wird.

2. Luftaustrittsvorrichtung nach Anspruch 1, **dadurch gekennzeichnet, dass** das Gitter (10) oder wenigstens ein Teil des Gitters (10) beweglich ist, um eine erste, den Bedingungen eines normalen Flugs entsprechende Position einzunehmen, in der das Gitter (10) oder der wenigstens eine Gitterteil gegenüber dem Auslass in der Verlängerung der aerodynamischen Fläche des Flugzeugs angeordnet ist, sowie eine weitere, insbesondere den Bedingungen einer Störung entsprechende Position, in der das Gitter (10) oder der wenigstens eine Gitterteil (10) die Öffnung wenigstens teilweise freigibt, um die Durchgangsfläche der Vorrichtung zu vergrößern.

3. Luftaustrittsvorrichtung nach Anspruch 2, **dadurch gekennzeichnet, dass** das Gitter (10) oder wenigstens ein Teil des Gitters (10) sich verschieben kann.

4. Luftaustrittsvorrichtung nach Anspruch 2, **dadurch gekennzeichnet, dass** das Gitter (10) oder wenigstens ein Teil des Gitters (10) verschwenken kann.

5. Luftaustrittsvorrichtung nach Anspruch 4, **dadurch gekennzeichnet, dass** das Gitter (10) oder wenigstens ein Teil des Gitters (10) um eine Schwenkachse (22) verschwenken kann, die zur Richtung des außerhalb des Flugzeugs strömenden Luftstroms (20) parallel verläuft.

6. Luftaustrittsvorrichtung nach Anspruch 4, **dadurch gekennzeichnet, dass** das Gitter (10) oder wenigstens ein Teil des Gitters (10) um eine Schwenkachse (22) verschwenken kann, die zur Richtung des außerhalb des Flugzeugs strömenden Luftstroms (20) senkrecht verläuft.

7. Luftaustrittsvorrichtung nach Anspruch 6, **dadurch gekennzeichnet, dass** die Schwenkachse (22) im Bereich der stromaufwärtigen Kante des Gitters (10) in der Richtung des außerhalb des Flugzeugs strömenden Luftstroms (20) angeordnet ist.

8. Luftaustrittsvorrichtung nach einem der Ansprüche 5 bis 7, **dadurch gekennzeichnet, dass** der Schwenkwinkel des Gitters in der Größenordnung von 30° liegt.

9. Flugzeug, das eine Luftaustrittsvorrichtung nach einem der vorstehenden Ansprüche umfasst.
